# EUROPÄISCHE PATENTSCHRIFT

(11) **EP 1 779 023 B1**
(45) Veröffentlichungstag und Bekanntmachung des Hinweises auf die Patenterteilung: **28.09.2011**
(21) Anmeldenummer: 05753231.9
(22) Anmeldetag: 13.06.2005
(51) Int. Cl.: F16N 25/02

(54) **EINLEITUNGSVERTEILER**
SINGLE LINE DISTRIBUTOR
DISTRIBUTEUR DE DECHARGEMENT

(30) Priorität: 12.08.2004 DE 102004039353
(43) Veröffentlichungstag der Anmeldung: 02.05.2007
(73) Patentinhaber: SKF Lubrication Systems Germany AG, 12277 Berlin (DE)
(72) Erfinder: PRZYBYLSKY, Michael, 12043 Berlin (DE)
(74) Vertreter: Grünecker, Kinkeldey, Stockmair & Schwanhäusser Anwaltssozietät
(86) Internationale Anmeldenummer: PCT/EP2005/006299
(87) Internationale Veröffentlichungsnummer: WO 2006/015644

(56) Entgegenhaltungen:
- DE-U1- 20 309 553
- US-A- 2 292 294
- US-A- 3 715 013
- US-A- 3 995 717
- US-A1- 2003 089 553

## Beschreibung

Die Erfindung betrifft einen Einleitungsverteiler zur dosierten Abgabe von Schmierstoff an eine Schmierstelle mit einer Steuereinrichtung, die einen von einer Grundstellung in eine Abgabestellung bewegbar ausgestalteten, durch ein Vorspannelement in die Grundstellung gedrückten Steuerkörper und eine mit einer Einlassöffnung verbundene, durch den Steuerkörper von einer Dosierkammer getrennte Steuerkammer umfasst, und mit einer Dosiereinrichtung, die einen Dosierkolben, die mit einer Abgabeöffnung verbundene Dosierkammer und eine durch den Dosierkolben von der Dosierkammer getrennte und an den Steuerkolben grenzende Betätigungskammer umfasst, wobei in der Abgabestellung die Betätigungskammer mit der Steuerkammer und in der Grundstellung mit der Dosierkammer verbunden ist.

Einleitungsverteiler oder Dosierverteiler der genannten Art sind aus dem Stand der Technik bekannt und werden als Teil von Zentralschmiereinrichtungen eingesetzt, die einen Schmierstoff von einer zentralen Schmierstoffquelle an angeschlossene Schmierstellen dosiert abgeben. Jeder Einleitungsverteiler ist durch eine Einlassöffnung mit der Schmierstoffquelle verbunden, wobei die Schmierstoffquelle sequentiell druckbeaufschlagten Schmierstoff in den Einleitungsverteiler drückt. Der Schmierstoffdruck kann beispielsweise durch eine manuelle oder motorisch betriebene Pumpe der Schmierstoffquelle erzeugt werden. Dabei wird jeder Einleitungsverteiler durch den druckbeaufschlagten, in die Betätigungskammer geleiteten Schmierstoff betätigt und gibt dadurch eine vorbestimmte, in der Dosierkammer des Einleitungsverteilers gespeicherte Schmierstoffmenge an die Schmierstelle ab. Nach Abgabe der Schmierstoffmenge wird der Einleitungsverteiler durch einen Druckabfall, der z. B. durch Abschalten der Pumpe verursacht wird, an der Einlassöffnung entlastet. Der sich in die Grundstellung zurückbewegende Einleitungsverteiler speichert dabei die vorbestimmte Menge Schmierstoff für seine nächste Betätigung. Hierzu wird der ursprünglich zur Betätigung des Einleitungsverteilers verwendete Schmierstoff im Zuge der Rückbewegung in die Grundstellung von der Betätigungskammer in die Dosierkammer umgeleitet. Der Schmierstoff dient also gleichzeitig als Steuermedium, das den Einleitungsverteiler betätigt. Mit Hilfe von Einleitungsverteilern können Zentralschmiereinrichtungen mit wenigen, weit auseinanderliegenden Schmierstellen, wie z.B. bei Bau- oder Landmaschinen, ohne erforderliche Steuerleitungen kostengünstig ausgestaltet werden.

Funktionswichtig für die bekannten Einleitungsverteiler ist eine ausreichend große Druckentlastung des anliegenden Schmierstoffs nach der Betätigung, weil der Einleitungsverteiler gegen den Schmierstoffdruck in seine Grundstellung zurückfahren und den Schmierstoff von der Betätigungskammer in die Dosierkammer umleiten muss. Der Einsatz von zähflüssigen Schmiermitteln, wie z.B. Fett, in Verbindung mit langen Schmiermittelleitungen kann dazu führen, dass die Druckentlastung in der Schmiermittelleitung zu gering ist. Dieses Problem wird bei niedrigen Temperaturen, wie z. B. im Winter, durch die ansteigende Konsistenz des Schmierstoffes zusätzlich verstärkt. Somit kann bei zu hohem Restdruck des an der Einlassöffnung anliegenden Schmierstoffs kein Schmierstoff innerhalb des Einleitungsverteilers gespeichert werden. Dies hat zur Folge, dass bei der nächsten Betätigung des Einleitungsverteilers kein oder zu wenig Schmierstoff an die Schmierstelle abgegeben wird die demzufolge ungeschmiert oder nicht ausreichend geschmiert bleibt. Hierdurch entsteht ein erhöhter Verschleiß an den zu schmierenden Bauteilen, wie z. B. Lagern und Führungen, wodurch Beschädigungen und hohe Kosten entstehen können.

Eine Lösung dieser Problematik bietet der Einleitungsverteiler der DE 203 09 553 U1, bei dem ein Ventilkolben unter anstehendem Schmierstoffdruck von einer Ausgangslage gegen eine Rückstellfeder in eine Dosierlage verschiebbar ist. In der Dosierlage wird ein Dosierkolben durch den Schmierstoffdruck gegen eine zweite Rückstellfeder betätigt und eine gespeicherte Schmierstoffmenge an eine Schmierstelle abgegeben. Bei einer Druckentlastung bewegen sich Ventilkolben und Dosierkolben nacheinander durch die beiden Rückstellfedern in ihre Ausgangslagen zurück und speichern Schmierstoff in einer Dosierkammer für die nächste Betätigung.

Nachteilig bei dem Einleitungsverteiler der DE 203 09 553 U1 ist seine relativ große Baugröße. Da der zur Verfügung stehende Einbauraum bei vielen Anwendungen begrenzt ist, kann der Einleitungsverteiler der DE 203 09 553 U1 durch seine große Baugröße häufig nicht eingesetzt werden.

Kleinerbauende Einleitungsverteiler sind im Stand der Technik mit einer Umsteuermanschette realisiert, durch die der Schmierstoffstrom im Einleitungsverteiler gesteuert wird. Nachteilig bei den Einleitungsverteilern mit Umsteuermanschette ist ihre relativ geringe Dosiermenge. Um Schmierstellen mit hohem Schmiermittelbedarf zu versorgen, müssen daher Einleitungsverteiler mit Umsteuermanschetten mehrfach betätigt werden bzw. mehrere Einleitungsverteiler gemeinsam eine Schmierstelle versorgen.

Daher liegt der vorliegenden Erfindung die Aufgabe zugrunde, einen Einleitungsverteiler zu liefern, bei dem das Verhältnis von Dosiermenge zu Baugröße gegenüber den bekannten Einleitungsverteilern vergrößert ist.

Erfindungsgemäß wird diese Aufgabe dadurch gelöst, dass die Steuereinrichtung von der Dosiereinrichtung umgeben ist.

Durch diese konstruktiv überraschend einfache Lösung lässt sich die Baugröße des erfindungsgemäßen Einleitungsverteilers reduzieren, ohne dass die abgebbare Dosiermenge verringert werden muss. Bei hohem Schmiermittelbedarf einer Schmierstelle und geringem Einbauraum müssen nicht, wie bisher z.B. bei den Einleitungsverteilern mit Umsteuermanschette, mehrere Einleitungsverteiler pro Schmierstelle eingesetzt werden, wodurch sich die Kosten der Zentralschmiereinrichtung in vorteilhafter Weise reduzieren lassen.

Der solchermaßen verbesserte Einleitungsverteiler kann durch verschiedene, voneinander unabhängig, jeweils für sich vorteilhafte Ausgestaltungen weiterentwickelt sein. Auf diese Ausgestaltungen und die mit den Ausgestaltungen jeweils verbundenen Vorteile wird im Folgenden kurz eingegangen.

So können der Steuerkörper in einem Steuerzylinder und der Dosierkolben um den Steuerzylinder herum beweglich angeordnet sein. Dies hat den Vorteil, dass der Steuerzylinder sowohl für den Steuerkörper als auch für den Dosierkolben als ein konstruktiv einfaches Führungselement ausgestaltet ist. Die Größe der Führungsflächen zwischen Steuerzylinder und Steuerkörper bzw. Dosierkolben sind dabei so ausgelegt, dass ein verkanten von Steuerkörper bzw. Dosierkolben unmöglich ist.

Um ein zusätzliches Führungselement für den Dosierkolben auszubilden, kann der Dosierkolben axial beweglich in einem Dosierzylinder angeordnet sein. Ferner kann der Dosierkolben als Ringkolben ausgebildet sein, der als ein rotationssymmetrisches Drehteil besonders kostengünstig herstellbar ist.

In einer weiteren vorteilhaften Ausgestaltung kann die Dosierkammer in zwei Teilkammern unterteilt sein, wobei die an den Steuerkörper angrenzende innere Teilkammer im Steuerzylinder und die an den Dosierkolben angrenzende äußere Teilkammer im Dosierzylinder ausgebildet ist. Dies hat den Vorteil, dass die Dosierkammer auf konstruktiv einfache Weise sowohl an den Steuerkörper als auch an den Dosierkolben angrenzt. Ferner kann das Volumen der an den Steuerkörper angrenzenden inneren Teilkammer kleiner sein als das der an den Dosierkolben angrenzenden äußeren Teilkammer. Hierdurch wird die Dosiermenge des erfindungsgemäßen Einleitungsverteilers vergrößert, weil nur das in der äußeren Teilkammer befindliche Schmiermittel vom Dosierkolben an die Schmierstelle abgegeben wird.

Weiterhin können die beiden Teilkammern der Dosierkammer durch einen Durchbruch im Steuerzylinder miteinander verbunden sein. Dies hat den Vorteil, dass der Durchbruch im Steuerzylinder besonders einfach zu fertigen ist und der Einleitungsverteiler einfach montierbar ist. Der Durchbruch ist dabei so am Steuerzylinder angeordnet, dass er zu keiner Zeit vom Dosierkolben versperrt oder überstrichen wird, damit die beiden Teilkammern der Dosierkammer jederzeit miteinander verbunden sind.

In einer vorteilhaften Weiterbildung kann am Dosierkolben wenigstens ein Dichtelement angeordnet sein, durch das der Dosierkolben zwischen dem Dosierzylinder und dem Steuerzylinder abgedichtet angeordnet ist. Dies hat den Vorteil, dass kein Schmiermittel an dem Dosierkolben vorbei zwischen Betätigungskammer und Dosierkammer funktionsstörend strömen und die vorbestimmte Dosiermenge ändern kann.

Um nach der Abgabe von Schmiermittel an die Schmierstelle das in der Betätigungskammer befindliche Schmiermittel in die Dosierkammer umzuleiten, kann der Dosierkolben durch mindestens ein weiteres Vorspannelement in Richtung der Betätigungskammer gedrückt sein. Das Vorspannelement, z.B. eine Druckfeder, ist dabei so ausgestaltet, dass die erzeugte Vorspannkraft den Dosierkolben gegen den Strömungswiderstand des Schmiermittels in Richtung der Betätigungskammer drückt. Weiterhin kann das weitere Vorspannelement innerhalb der Dosierkammer angeordnet sein, wodurch der Einleitungsverteiler konstruktiv besonders einfach ausgestaltet und leicht montierbar ist. Der Dosierkolben kann mit einer langen, axialen Führungsfläche um den Steuerzylinder und einem Flansch ausgestaltet sein, an dem sich das weitere Vorspannelement axial abstützt.

In einer weiteren vorteilhaften Ausgestaltung kann im Steuerzylinder eine Steueröffnung ausgeformt sein, durch welche die Betätigungskammer in der Grundstellung mit der Dosierkammer und in der Abgabestellung mit der Steuerkammer verbunden ist. Dies hat den Vorteil, dass die Verbindung zwischen dem Inneren des Steuerzylinders und der Betätigungskammer fertigungstechnisch besonders einfach herzustellen ist und dadurch die Fertigungskosten gesenkt werden. Dies ist besonders vorteilhaft im Vergleich zum Einleitungsverteiler der DE 203 09 553 U1, bei dem die Steueröffnung durch mehrere, nach außen abzudichtende fertigungsaufwendige Bohrungen ausgestaltet ist. Weiterhin wird durch die lange Steueröffnung der DE 203 09 553 U1 das Volumen der Betätigungskammer unvorteilhaft vergrößert, was bei kleinen Dosiermengen zu Dosierungenauigkeiten führt, verursacht durch die Kompressibilität des Schmierstoffs. Dieses Problem wird beim erfindungsgemäßen Einleitungsverteiler durch die kurze kleinvolumige Steueröffnung in der Wandung des Steuerzylinders gelöst. Die Steueröffnung ist dabei an einer Stelle im Steuerzylinder angeordnet, dass sie nicht vom Dosierkolben verschlossen werden kann und somit immer mit der Betätigungskammer verbunden ist.

Um den Einleitungsverteiler konstruktiv weiter zu vereinfachen, kann eines der axialen Enden des Steuerzylinders als die Einlassöffnung ausgebildet sein. Ferner kann eines der axialen Enden des Steuerzylinders als die Auslassöffnung ausgebildet sein. Somit kann das eine axiale Ende des Steuerzylinders als Einlassöffnung und das andere als Auslassöffnung ausgebildet sein, wodurch der Steuerzylinder als rotationssymmetrisches Drehteil kostengünstig gefertigt werden kann.

In einer vorteilhaften Weiterbildung kann im Steuerkörper ein Betätigungskanal ausgeformt sein, durch den die Betätigungskammer in der Abgabestellung mit der Steuerkammer verbunden und in der Grundstellung von der Steuerkammer getrennt ist. Durch diese Ausgestaltung muss der Steuerkörper zum Verbinden von Betätigungs- und Dosierkammer axial nicht über die Steueröffnung hinweg bewegt werden. Dies hat den Vorteil, dass der Steuerkörper in der Grundstellung, wenn die Betätigungskammer mit der Dosierkammer verbunden ist, durch den Steuerzylinder am ganzen Umfang geführt ist. Ferner kann eine Mündungsöffnung des Betätigungskanals am Umfang quer zur Hubachse des Steuerkörpers, in der Abgabestellung mit der Steueröffnung wenigstens teilweise überlappend und in der Grundstellung vom Steuerzylinder verschlossen ausgebildet sein.

In einer weiteren vorteilhaften Ausgestaltung kann im Steuerkörper ein Umströmkanal ausgeformt sein, durch den die Betätigungskammer in der Grundstellung mit der Dosierkammer verbunden und in der Abgabestellung von der Dosierkammer getrennt ist. Hierdurch wird ähnlich wie beim Betätigungskanal die Führung des Steuerkörpers auch während des Umströmens am ganzen Umfang gewährleistet. Ferner kann eine Mündungsöffnung des Umströmkanals am Umfang, quer zur Hubachse des Steuerkörpers, in der Grundstellung mit der Steueröffnung wenigstens teilweise überlappend und in der Abgabestellung vom Steuerzylinder verschlossen ausgebildet sein.

Um den im Steuerzylinder geführten Steuerkörper zu schmieren, kann der Steuerkörper zwei radial zur Hubachse verlaufenden Umfangsnuten aufweisen, in denen jeweils die Mündungsöffnung des Betätigungs- oder Umströmkanals angeordnet ist. Durch die Umfangsnut wird die Wandung des Steuerzylinders während der Hubbewegung mit Schmiermittel benetzt, wodurch der Reibungswiderstand zwischen Steuerkörper und Steuerzylinder gesenkt wird. Außerdem findet durch die Umfangsnuten ein Druckausgleich am Umfang des Steuerkörpers statt. So wird verhindert, dass durch den Schmierstoff eine hydraulische Querkraft auf den Steuerkörper erzeugt wird, durch die der Steuerkörper schwergängig wird.

Weiterhin kann der Steuerkörper wenigstens ein Dichtmittel umfassen, durch das der Steuerkörper zum Steuerzylinder abgedichtet ist. Hierdurch ist sichergestellt, dass kein Schmiermittel an dem Steuerkörper vorbei, beispielsweise von der Steuerkammer in die Dosierkammer, strömen kann.

Das Spiel zwischen dem Steuerkörper und dem Steuerzylinder ist besonders vorteilhaft, wenn es bei niedrigen Temperaturen groß und bei hohen Temperaturen klein ist. Dies begründet sich so, dass Schmierstoffe, wie z. B. Fett, bei niedrigen Temperaturen besonders dickflüssig sind und somit hohe Scherkräfte am Steuerkörper erzeugen. Ein großes Steuerkörperspiel verringert die Scherkräfte. Auf der anderen Seite sind die Schmierstoffe bei hohen Temperaturen dünnflüssig, und ein kleines Steuerkörperspiel dichtet den Steuerkörper zum Steuerzylinder hin ab. Um optimale Steuerkörperspiele bei unterschiedlichen Temperaturen zu erreichen, können der Steuerkörper und der Steuerzylinder aus Materialien mit unterschiedlichen Längenausdehnungskoeffizienten hergestellt sein und kann das Spiel zwischen dem Steuerkörper und dem Steuerzylinder bei einer ersten Betriebstemperatur größer sein als bei einer zweiten, im Vergleich zur ersten höheren Betriebstemperatur.

Um die Dosiermenge des erfindungsgemäßen Einleitungsverteilers zu verändern, kann der Einleitungsverteiler eine Einstellvorrichtung umfassen, durch die der axiale Hub des Dosierkolbens einstellbar ist. Ferner kann die Einstellvorrichtung einen in Hubrichtung des Dosierkolbens fest angeordneten Dosierkolbenanschlag umfassen, der auswechselbar am Dosierzylinder oder am Dosierkolben angeordnet ist. Alternativ kann die Einstellvorrichtung einen in Hubrichtung des Dosierkolbens an verschiedenen Positionen festlegbaren Dosierkolbenanschlag umfassen, der am Dosierzylinder oder am Dosierkolben angeordnet ist. Hierdurch wird die Einstellvorrichtung konstruktiv einfach ausgestaltet. Weiterhin kann die Einstellvorrichtung einen in Hubrichtung des Dosierkolbens an verschiedenen Positionen festlegbaren Dosierkolbenanschlag umfassen, der mit einer beweglich am Dosierzylinder angeordneten Einstellschraube verbunden ist. Dies hat den Vorteil, dass sich die äußere Länge des Einleitungsverteilers bei unterschiedlichen Einstellungen der Dosiermenge nicht verändert.

Die Erfindung betrifft neben dem oben beschriebenen Einleitungsverteiler und seinen weiteren Ausgestaltungen auch eine Anordnung zur dosierten Abgabe von einem Schmierstoff an mehrere Schmierstellen, mit mehreren Einleitungsverteilern und mit einem Schmierstoffverteilerkanal, der mit einer Schmierstoffquelle verbindbar ausgestaltet ist, wobei die Einleitungsverteiler mit dem Schmierstoffverteilerkanal verbunden und vom Schmierstoffverteilerkanal nach außen wegstehend angebracht sind. Um die Baugröße der Anordnung bei gleichbleibender oder vergrößerter Dosiermenge zu verkleinern, sind die Einleitungsverteiler nach einer der oben genannten Ausführungsformen ausgestaltet.

In einer vorteilhaften Ausgestaltung der erfindungsgemäßen Anordnung können die Einleitungsverteiler nebeneinander am Schmierstoffverteilerkanal angeordnet sein und abwechselnd in gleicher Abstehrichtung vom Schmierstoffverteilerkanal wegstehen, wobei die beiden Abstehrichtungen V-förmig zueinander angeordnet sind. Dies hat den Vorteil, dass besonders viele Einleitungsverteiler nebeneinander angeordnet werden können, ohne ihre Zugänglichkeit einzuschränken. Ferner kann der Winkel zwischen den beiden Abstehrichtungen ein kleiner, spitzer Winkel sein und vorzugsweise etwa 20° betragen, wodurch sich eine besonders kompakte Bauweise der Anordnung realisieren lässt. Alternativ sind auch beliebige andere Winkel zwischen den Abstehrichtungen möglich. Weiterhin können auch mehrere der V-förmigen Einleitungsverteilerreihen am Umfang des Schmierstoffverteilerkanals sternförmig angeordnet sein, um besonders viele Schmierstellen von einem Schmierstoffverteilerkanal zu versorgen. Um eine möglichst einfache Gehäusebauweise zu erreichen, kann die Anordnung jedoch auch einreihig sein.

Im Folgenden wird die Erfindung beispielhaft mit Bezug auf die beigefügten Zeichnungen erläutert. Die unterschiedlichen Merkmale können dabei unabhängig voneinander kombiniert werden, wie dies oben bei den einzelnen vorteilhaften Ausgestaltungen bereits dargelegt wurde.

Es zeigen:
- Fig. 1: eine Ausführungsform eines erfindungsgemäßen Einleitungsverteilers schema- tisch in einer Seitenansicht im Schnitt in einer ersten Betriebsstellung;
- Fig. 2: zeigt den Einleitungsverteiler aus Fig. 1 in einer zweiten Betriebsstellung;
- Fig. 3: zeigt eine Ausführungsform einer erfindungsgemäßen Anordnung schematisch in einer perspektivischen Ansicht;
- Fig. 4: zeigt eine weitere Ausführungsform eines erfindungsgemäßen Einleitungsvertei- lers;
- Fig. 5: zeigt eine weitere Ausführungsform eines erfindungsgemäßen Einleitungsvertei- lers.

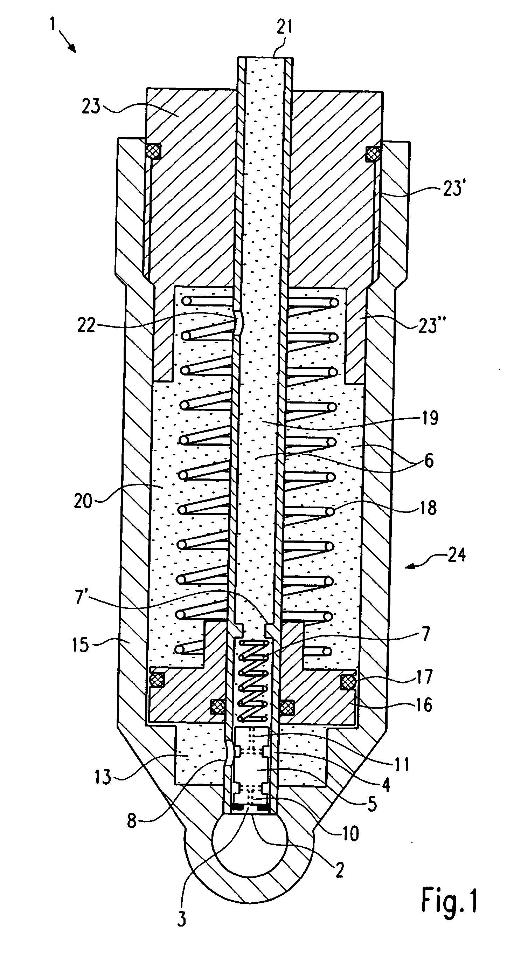

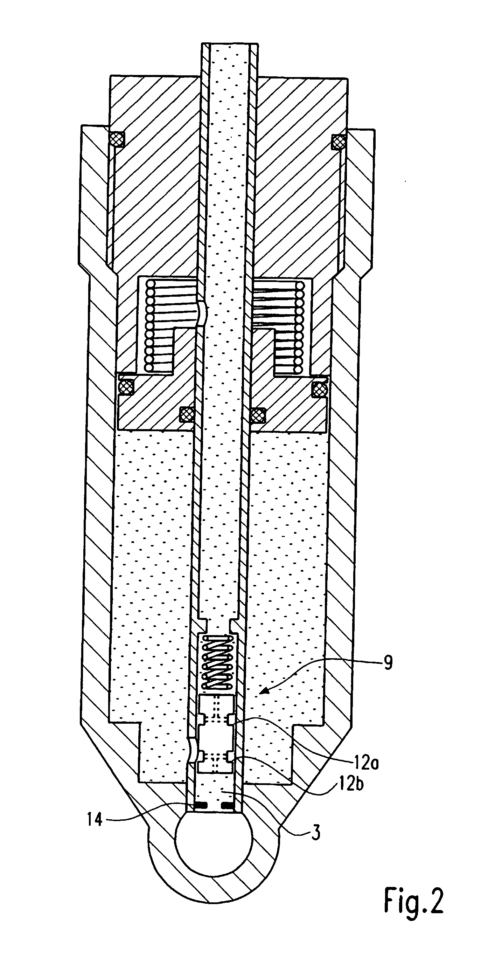

Zunächst wird der allgemeine Aufbau eines erfindungsgemäßen Einleitungsverteilers mit Bezug auf die Fig. 1 und 2 beschrieben.

Fig. 1 zeigt den Einleitungsverteiler 1 in einer schematischen Schnittansicht. Der Einleitungsverteiler 1 umfasst eine Steuereinrichtung 9 und eine Dosiereinrichtung 24.

Die Steuereinrichtung 9 weist eine Einlassöffnung 2 auf, durch die ein Schmierstoff, wie Öl oder Fett, in den Einleitungsverteiler 1 eingeleitet werden kann. Der Schmierstoff kann dabei durch eine in Fig. 1 nicht dargestellte Schmierstoffpumpe zur Einlassöffnung 2 geleitet und sequenziell druckbeaufschlagt werden. Die Einlassöffnung 2 mündet in eine Steuerkammer 3, welche in einem Steuerzylinder 4 angeordnet und durch einen im Steuerzylinder 4 axial verschiebbar angeordneten Steuerkörper 5 von einer Dosierkammer 6 getrennt ist. An dem Steuerkörper 5 ist weiterhin ein als Feder ausgestaltetes. Vorspannelement 7 angeordnet, das mit dem Steuerkörper 5, dem Steuerzylinder 4 und der Steuerkammer 3 und zusammen mit einer in der Wandung des Steuerzylinders 4 angeordneten Steuerbohrung 8 die Steuereinrichtung 9 des erfindungsgemäßen Einleitungsverteilers 1 ausbildet.

Die Steuereinrichtung 9 steuert den Schmiermittelstrom innerhalb des erfindungsgemäßen Einleitungsverteilers 1.

Der zur Steuereinrichtung 9 gehörende Steuerkörper 5 ist bei der in der Fig. 1 beispielhaft dargestellten Ausführungsform als ein zylindrischer Kolben ausgestaltet, der axial beweglich im Steuerzylinder 4 angeordnet ist. Der Außendurchmesser des Steuerkörpers 5 ist dabei kleiner als der Innendurchmesser des Steuerzylinders 4 ausgebildet, so dass die Wandung des Steuerzylinders 4 eine Gleitführung für den Steuerkörper 5 ausbildet. Die Länge des Steuerkörpers 5 ist dabei größer als der Durchmesser, damit der Steuerkörper 5 innerhalb des Steuerzylinders 4 mit großer Führungsfläche gehalten wird und nicht verkantet.

Der Steuerkörper 5 ist von der in Fig. 1 dargestellten Grundstellung in eine in Fig. 2 dargestellte Abgabestellung bewegbar.

Im Steuerkörper 5 sind ein Betätigungskanal 10 und ein Umströmkanal 11 ausgebildet. Am Umfang des Steuerkörpers 5 sind zwei axial voneinander beabstandete Umfangsnuten 12 angeordnet. Der Betätigungskanal 10 verläuft von dem an die Steuerkammer 3 angrenzenden axialen Ende des Steuerkörpers 5 bis zu der Umfangsnut 12a, die in Richtung der Steuerkammer 3 liegt. Der Umströmkanal 11 verläuft von der anderen, der in Richtung der Dosierkammer 6 liegenden Umfangsnut 12 zu dem der Dosierkammer 6 zugewandten axialen Ende des Steuerkörpers 5. Sowohl der Betätigungskanal 10 als auch der Umströmkanal 11 sind jeweils als eine die Umfangsnuten 12a, 12b diametral durchstoßende Querbohrung, die von einer Axialbohrung mit dem jeweiligen axialen Ende des Steuerkörpers 5 verbunden wird, ausgestaltet.

In der in Fig. 1 dargestellten Grundstellung des Steuerkörpers 5 ist die Steuerbohrung 8 so in der Wandung des Steuerzylinders 4 angeordnet, dass die Steuerbohrung 8 wenigstens teilweise mit der mit dem Umströmkanal 11 verbundenen Umfangsnut 12a überlappt. Hierdurch ist in der Grundstellung die Dosierkammer 6 mit einer Betätigungskammer 13, in welche die Steuerbohrung 8 mündet, verbunden. Die Umfangsnut 12a ist dabei soweit von dem der Dosierkammer 6 angrenzenden Ende beabstandet, dass der Steuerkörper 5 in der Grundstellung von dem Steuerzylinder 4 am ganzen Umfang geführt wird. Um den Steuerkörper 5 in der Grundstellung zu der Steuerbohrung 8 exakt zu positionieren, wird der axiale Hub des Steuerkörpers 5 in Richtung der Steuerkammer 3 durch einen Anschlag, z.B. einen in den Steuerzylinder eingesetzten Sicherungsring 14, begrenzt.

In der in Fig. 2 dargestellten Abgabestellung des Steuerkörpers 5 überschneidet sich die Steuerbohrung 8 wenigstens teilweise mit der an den Betätigungskanal 10 angrenzenden Umfangsnut 12b. Hierdurch verbindet der Betätigungskanal 10 in der Abgabestellung die Steuerkammer 3 mit der Betätigungskammer 13, in welche die Steuerbohrung 8 mündet.

Durch Schmierstoff, der sich im Betrieb des Einleitungsverteilers 1 in den Umfangsnuten 12 befindet, werden die Führungsflächen zwischen dem Steuerkörper 5 und dem Steuerzylinder 4 während der Bewegung des Steuerkörpers 5 zwischen der Grund- und der Abgabestellung geschmiert. Durch die Ausgestaltung als Umfangsnuten wird Schmierstoff am gesamten Umfang des Steuerkörpers 5 verteilt, wodurch eine Beschädigung der Führungsflächen besonders zuverlässig verhindert wird. Weiterhin ist der Steuerkörper 5 durch die Schmierung leichtgängig im Steuerzylinder verschiebbar.

Durch das in Fig. 1 beispielhaft als Druckfeder ausgestaltete Vorspannelement 7 wird der Steuerkörper 5 in seine Grundstellung gedrückt. Die Druckfeder 7 ist innerhalb der Dosierkammer 6 zwischen dem Steuerkörper 5 und einem im Steuerzylinder 4 angeordneten als Federsitz ausgestalteten Vorsprung 7'angebracht.

Durch das unter Druck in die Steuerkammer 3 einströmende und axial gegen den Steuerkörper 5 drückende Schmiermittel wird der Steuerkörper 5 von seiner in Fig. 1 dargestellten Grundstellung in die in Fig. 2 dargestellte Abgabestellung gedrückt. Dabei wird das Vorspannelement 7 komprimiert. Das zusammengedrückte Vorspannelement 7 bildet gleichzeitig eine Hubbegrenzung für den Steuerkörper 5 in Richtung der Dosierkammer 6. Alternativ kann der Hub auch durch einen im Steuerzylinder 4 ausgebildeten Anschlag begrenzt werden. Wenn der Druck des in die Steuerkammer 3 einströmenden Schmiermittels abfällt, drückt das Vorspannelement 7 den Steuerkörper 5 von der Abgabestellung in die Grundstellung zurück. Das Vorspannelement 7 und die Durchmesserfläche des Steuerkörpers 5 bestimmen den vom Steuerkörper 5 in Richtung der Steuerkammer 3 erzeugten Druck. Dieser Druck ist beim erfindungsgemäßen Einleitungsverteiler 1 so ausgelegt, dass der Steuerkörper 5 bis zu einem Restdruck des Schmierstoffs in der Steuerkammer 3 von etwa 50 bar in die Grundstellung gedrückt werden kann. Dies ist besonders vorteilhaft, weil Schmierstoffe, wie z. B. Fett, bei niedrigen Temperaturen und langen Schmiermittelleitungen einen relativ hohen Restdruck behalten.

Um das Spiel des Steuerkörpers 5 mit dem Steuerzylinder 4 temperaturabhängig zu verändern, sind der Steuerkörper 5 und der Steuerzylinder 4 aus Materialien mit unterschiedlichen Längenausdehnungskoeffizienten hergestellt. Dadurch wird bei niedrigen Temperaturen, wenn der Schmierstoff besonders zähflüssig ist, ein großes Spiel und bei hohen Temperaturen, wenn der Schmierstoff besonders dünnflüssig ist, ein kleines Spiel eingestellt.

Die Dosiereinrichtung 24 des erfindungsgemäßen Einleitungsverteilers 1 umfasst die Betätigungskammer 13, eine Dosierkammer 6 und einen Dosierkolben 16 und umgibt die Steuereinrichtung 9.

Wenn das unter dem Betätigungsdruck stehende Schmiermittel den Steuerkörper 5, wie in Fig. 2 dargestellt, in seine Abgabestellung bewegt, strömt das Schmiermittel durch den Betätigungskanal 10 und die Steuerbohrung 8 in die Betätigungskammer 13.

Die Betätigungskammer 13, die durch die Steuerbohrung 8 an den Steuerkörper 5 angrenzt, ist um den Steuerzylinder 4 herum ausgebildet. Nach außen wird die Betätigungskammer 13 durch einen konzentrisch um den Steuerzylinder 4 angeordneten Dosierzylinder 15 begrenzt. Das an die Betätigungskammer 13 angrenzende axiale Ende des Dosierzylinders 15 ist verschlossen. Weiterhin ist die Betätigungskammer 13 durch den Dosierkolben 16 von der Dosierkammer 6 getrennt. Der ringförmig ausgebildete Dosierkolben 16 ist innerhalb des Dosierzylinders 15 und um den Steuerzylinder 4 herum axial beweglich angeordnet.

Der Steuerzylinder 4 ist als Führungsstange für den Dosierkolben 16 ausgebildet, auf welcher der Dosierkolben 16 axial verschiebbar angeordnet ist. Die den Steuerzylinder 4 umgebende Führungsfläche des Dosierkolbens 16 ist axial so lang ausgeformt, dass der Dosierkolben nicht verkantet. Als eine zusätzliche Führung für den Dosierkolben 16 ist die Innenfläche des Dosierzylinders 15, in die der Dosierkolben hin- und hergleitet, ausgestaltet. Der Dosierzylinder 15 ist als dünnwandiges Rohr ausgestaltet.

Um die Betätigungskammer 13 zu der Dosierkammer 6 abzudichten, sind an dem Dosierkolben 16 ein oder mehrere Dichtelemente 17 angeordnet. Die Dichtelemente 17 dichten den Dosierkolben 16 zum Dosierzylinder 15 und Steuerzylinder 4 hin ab. Alternativ kann auch ein einzelnes Dichtelement am Dosierkolben angebracht sein, das den Dosierzylinder 15 zum Steuerzylinder 4 abdichtet.

Wenn das den Steuerkörper 5 in seine Abgabestellung bewegende, druckbeaufschlagte Schmiermittel durch den Betätigungskanal 10 in die Betätigungskammer 13 strömt, drückt das Schmiermittel axial auf den Dosierkolben 16 und bewegt diesen aus seiner in Fig. 1 dargestellten Ruhestellung in seine in Fig. 2 dargestellten Betätigungsstellung. In der Ruhestellung des Dosierkolbens 16 ist das Volumen der Betätigungskammer 13 minimal, in der Betätigungsstellung maximal. Das Volumen der Dosierkammer 6 dagegen ist in der in Fig. 1 dargestellten Ruhestellung des Dosierkolbens 16 maximal und in der in Fig. 2 dargestellten Betätigungsstellung minimal. Der Dosierkolben 16 wird durch ein in der Dosierkammer 6 angeordnetes weiteres Federelement 18 in Richtung seiner Ruhestellung gedrückt.

Der Dosierkolben 16 trennt die Betätigungskammer 13 von der Dosierkammer 6, die in zwei Teilkammern 19, 20 aufgeteilt ist. Die erste, innere Teilkammer 19 der Dosierkammer 6 ist innerhalb des Steuerzylinders 4 an den Steuerkörper 5 angrenzend ausgebildet und mit einer Abgabeöffnung 21 des Einleitungsverteilers 1 verbunden. Bei der in Fig. 1 beispielhaft dargestellten Ausführungsform ist die Abgabeöffnung 21 dem Steuerkörper 5 gegenüberliegend am axialen Ende des Steuerzylinders 4 angeordnet. Die innere Teilkammer 19 ist durch einen Durchbruch 22 im Steuerzylinder 4 mit der um den Steuerzylinder 4 angeordneten äußeren Teilkammer 20 der Dosierkammer 6 verbunden.

Der Durchbruch 22 ist bei der in den Fig. 1 bis 3 dargestellten Ausführungsform als eine leicht fertigbare Radialbohrung im Steuerzylinder 4 ausgebildet. In der axialen Richtung des Steuerzylinders 4 ist der Durchbruch 22 so angeordnet, dass er zu keiner Zeit vom Dosierkolben 16 versperrt wird. Somit sind die Teilkammern 19, 20 der Dosierkammer 6 stets miteinander verbunden.

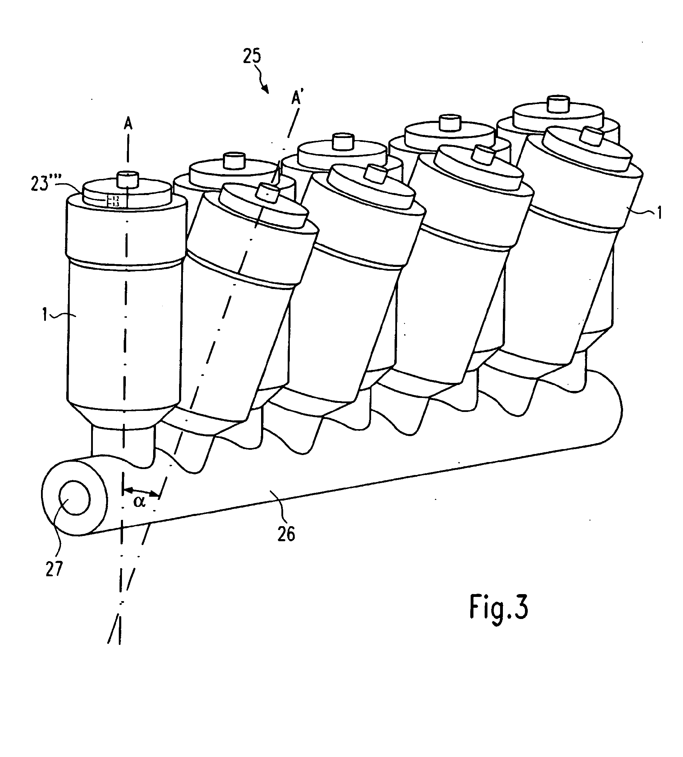

Die äußere Teilkammer 20 der Dosierkammer 6 ist zwischen Dosierzylinder 15 und Steuerzylinder 4 ausgebildet und wird axial auf der einen Seite durch den Dosierkolben 16 begrenzt. Auf der anderen Seite ist sie durch eine stopfenförmige Abschlussschraube 23 verschlossen. Die Abschlussschraube 23 ist rotationssymmetrisch ausgestaltet und weist einen Durchgang auf, durch den der Steuerzylinder 4 hindurchstößt. Die Abschlussschraube 23 hat ein Außengewinde 23', mit dem sie in den mit einem Innengewinde versehenen Dosierzylinder 15 im Gewindeeingriff steht. Je nach Einschraubtiefe der Abschlussschraube 23, die einen Dosierkolbenanschlag 23" ausbildet, verändert sich die Dosiermenge des erfindungsgemäßen Einleitungsverteilers 1. Durch die Selbsthemmung der Gewindegänge wird die Abschlussschraube 23 in der jeweils eingestellten Position gehalten. Der mit dem Dosierzylinder 15 verbundene Dosierkolbenanschlag 23" bildet so eine Einstellvorrichtung des erfindungsgemäßen Einleitungsverteilers 1 aus, mit dem der Dosierkolbenhub einstellbar ist. Die Abschlussschraube 23 kann eine Skala 23"' (Fig. 3) aufweisen, an der die eingestellte Dosiermenge ablesbar ist.

Der Steuerzylinder 4 ist als dünnwandiges Rohr ausgestaltet, bei dem das eine axiale Ende die Einlassöffnung 2 und das andere gegenüberliegende axiale Ende die Abgabeöffnung 21 ausbildet. Der Steuerzylinder 4 ist somit konstruktiv besonders einfach ausgestaltet und kostengünstig herstellbar.

Wenn sich der Dosierkolben 16 durch das druckbeaufschlagte in die Betätigungskammer 13 einströmende Schmiermittel von der in Fig. 1 dargestellten Ruhestellung in die in Fig. 2 dargestellte Betätigungsstellung bewegt, verkleinert sich das Volumen der äußeren Teilkammer 20. Hierdurch wird ein in der äußeren Teilkammer 20 befindliches Schmiermittel durch den Durchbruch 22 und die ebenfalls mit Schmiermittel gefüllte innere Teilkammer 19 aus der Abgabeöffnung 21 herausgedrückt. Von der Abgabeöffnung 21 aus wird das Schmiermittel in Richtung einer in Fig. 1 nicht dargestellten Schmierstelle geleitet.

Bei der Bewegung des Dosierkolbens 16 von der Ruhestellung in die Betätigungsstellung wird die in der Dosierkammer 6 zwischen Dosierkolben 16 und Stopfen 23 angeordnetes Federelement 18 komprimiert. Bei der in Fig. 1 beispielhaft dargestellten Ausführungsform des erfindungsgemäßen Einleitungsverteilers 1 ist das weitere Federelement 18 als Druckfeder ausgestaltet.

Der Dosierkolben 16 des erfindungsgemäßen Einleitungsverteilers 1 bleibt in seiner in Fig. 2 dargestellten Betätigungsstellung bis der Druck des in der Betätigungskammer 13 befindlichen Schmierstoffs abfällt. Dies wird üblicherweise durch ein Abschalten der in Fig. 2 nicht dargestellten Schmierstoffpumpe und einer anschließenden Druckentlastung erreicht. Bei einem Druckabfall des in der Steuerkammer 3 und der Betätigungskammer 13 befindlichen Schmierstoffs drückt das Vorspannelement 7 zunächst den Steuerkörper 5 von seiner Abgabestellung in seine Grundstellung, wie in Fig. 1 gestellt. In der Grundstellung verbindet der Umströmkanal 11 des Steuerkörpers 5 die Betätigungskammer mit der inneren Teilkammer 19 der Dosierkammer 6. Das zweite Vorspannelement 18 drückt axial auf den Dosierkolben 16 und verschiebt diesen axial von seiner Betätigungsstellung in seine Ruhestellung. Dabei drückt der Dosierkolben 16 das in der Betätigungskammer 13 befindliche Schmiermittel durch den Umströmkanal 11 in die Dosierkammer 6. Das in der Dosierkammer 6 nun befindliche Schmiermittel wird bei der nächsten Betätigung des Einleitungsverteilers 1 an die Schmierstelle wie oben beschrieben abgegeben.

Die Steuereinrichtung 9 ist bei dem erfindungsgemäßen Einleitungsverteiler 1 von der Dosiereinrichtung 24 umgeben. Hierdurch lässt sich eine besonders kompakte Bauweise des erfindungsgemäßen Einleitungsverteilers 1 realisieren. Die axiale Querschnittsfläche des Steuerkörpers 5 ist dabei kleiner als die des Dosierkolbens 16. Durch die kleine Querschnittsfläche kann der Steuerkörper 5 auch gegen relativ hohe Restdrücke des Schmierstoffs in seine Grundstellung gedrückt werden. Auf der anderen Seite ist die Dosiermenge an Schmierstoff, die pro Betätigung an die.Schmierstelle abgegeben wird, durch die große Querschnittsfläche des Dosierkolbens relativ groß.

Fig. 3 zeigt eine schematische Darstellung einer erfindungsgemäßen Anordnung 25 mit mehreren Einleitungsverteilern 1 und einem Schmierstoffverteilerkanal 26. Der Schmierstoffverteilerkanal 26 ist mit einer Versorgungsöffnung 27 an eine in Fig. 3 nicht dargestellte Schmiermittelquelle anschließbar. Mehrere Einleitungsverteiler 1 sind mit dem Schmierstoffverteilerkanal 26 verbunden. Dabei sind die Einleitungsverteiler 1 in Längsrichtung des Schmierstoffverteilerkanals 26 nebeneinander vom Schmierstoffverteilerkanal nach außen wegstehend angeordnet. Jeder zweite Einleitungsverteiler 1 ist dabei in gleicher Abstehrichtung A, A' angeordnet. Die so ausgebildeten zwei Reihen von Einleitungsverteilern 1 mit den Abstehrichtungen A und A' sind in Fig. 3 beispielhaft dargestellt. Um eine gute Zugänglichkeit der einzelnen Einleitungsverteiler 1 zu gewährleisten, sind die beiden Abstehrichtungen A, A' V-förmig zueinander angeordnet. Bei der in Fig. 3 beispielhaft dargestellten Anordnung 25 beträgt der Winkel α zwischen den beiden Abstehrichtungen A, A' in etwa 20°. Alternativ können die Einleitungsverteiler 1 auch in gleicher Abstehrichtung A, A' vom Schmierstoffverteilerkanal 26 wegstehen.

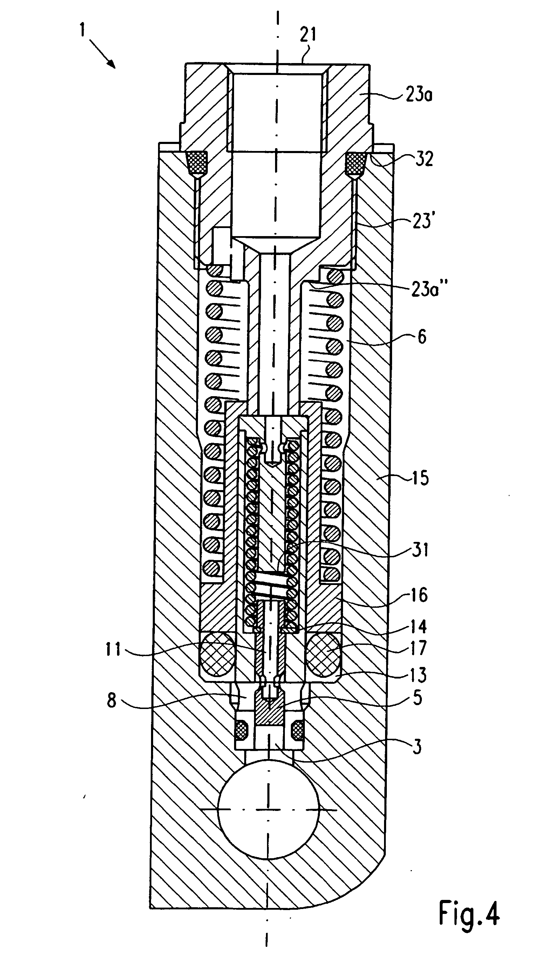

Fig. 4 zeigt eine schematische Darstellung einer weiteren Ausführungsform eines erfindungsgemäßen Einleitungsverteilers 1 im Schnitt. Im Folgenden werden die Unterschiede zu den oben beschriebenen Ausführungsformen beschrieben. Für gleiche Teile werden die gleichen Bezugszeichen verwendet.

Bei der in Fig. 4 dargestellten Ausführungsform ist der in seiner Grundstellung dargestellte Steuerkörper 5 ohne den Betätigungskanal 10 ausgestaltet. Die Betätigungskammer 13 ist in der Grundstellung durch den im Steuerkörper 5 ausgebildeten Umströmkanal 11 mit der Dosierkammer 6 verbunden. Die Steuerbohrung 8 gibt die Mündung des Umströmkanals 11 frei. In der nicht dargestellten Abgabestellung ist der Steuerkörper 5 gegen einen im Steuerzylinder 4 ausgebildeten Steuerkörperanschlag 31 gedrückt. Dabei gibt der Steuerkörper 5 die Verbindung von der Steuerkammer 3 zur Steuerbohrung 8 frei, wodurch die Steuerkammer 3 mit der Betätigungskammer 13 verbunden ist.

Die Abgabeöffnung 21 ist bei der Ausführungsform in Fig. 4 in der Abschlussschraube 23a ausgebildet, an die eine zur Schmierstelle führende Schmiermittelleitung (nicht dargestellt) anbringbar ist. Dabei ist die Abgabeöffnung 21 mit einem vorzugsweise genormten Innengewinde versehen, in das die mit einem entsprechendem Außengewinde ausgestaltete Schmiermittelleitung einschraubbar ist. Alternativ kann in der Abgabeöffnung 21 auch eine Steckverbindung ausgestaltet sein, in welche die Schmiermittelleitung fluiddicht einsteckbar ist. Die Abschlussschraube 23a ist mit einem Außengewinde 23' versehen und in den Dosierzylinder 15 eingeschraubt. Anders als bei der in den Fig. 1 und 2 dargestellten Ausführungsform wird die Abschlussschraube 23a bis zu einem Absatz 32 in den Dosierzylinder 15 eingeschraubt. Die Abschlussschraube 23a kann bei der in Fig. 4 dargestellten Ausführungsform gegen eine andere Abschlussschraube mit unterschiedlich langem Dosierkolbenanschlag 23a" ausgewechselt werden. Die Dosiermenge des in Fig. 4 dargestellten erfindungsgemäßen Einleitungsverteilers 1 kann so variiert werden. Alternativ kann der Dosierkolbenanschlag 23a" auch am Dosierkolben 16 angeordnet sein.

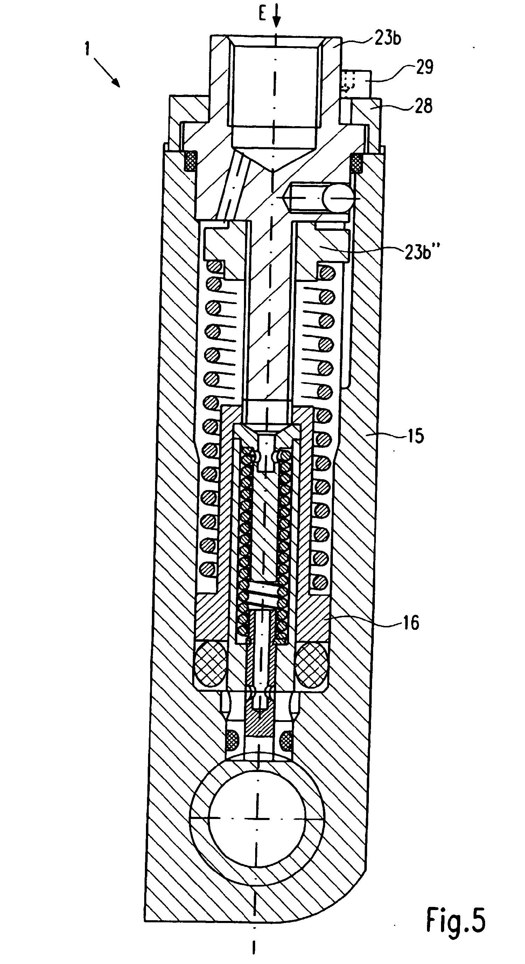

Fig. 5 zeigt eine weitere Ausführungsform des erfindungsgemäßen Einleitungsverteilers 1 schematisch im Schnitt. Für gleiche Teile werden die gleichen Bezugszeichen verwendet.

Bei der in Fig. 5 dargestellten Ausführungsform ist, im Unterschied zu der in Fig. 4, der Dosierkolbenanschlag 23b" mit einer Einstellschraube 23b über Gewinde miteinander verbunden ausgestaltet. Weiterhin ist die Einstellschraube 23b in den Dosierkolben 15 in einer Einsteckrichtung E eingesteckt. Die Einstellschraube 23b ist im Dosierkolben 15 passgenau angeordnet und darin um die Längsachse des Einleitungsverteilers drehbar. Axial wird die Einstellschraube 23b durch eine Fixierhülse 28 gegen ein Herausrutschen aus dem Dosierkolben 15 gehalten. Die Fixierhülse 28 ist durch Befestigungsmittel, wie z. B. eine Schraube 29, mit dem Dosierkolben 15 verbunden. Der Dosierkolbenanschlag 23b" ist über einen Gewindetrieb verstellbar. Der Gewindetrieb wird durch den mit einem Muttergewinde versehenen Dosierkolbenanschlag 23b", der mit der mit einem Außengewinde ausgestalteten Einstellschraube 23b verbunden ist, ausgebildet.

Beim Drehen der Einstellschraube 23b der in Fig. 5 dargestellten Ausführungsform bewegt sich der Dosierkolbenanschlag 23b" in Hubrichtung des Dosierkolbens 16 vor und zurück je nach Drehrichtung. Durch diese Gewindetriebanordnung der Einstellschraube 23b mit dem Dosierkolbenanschlag 23b" ist der Hub des Dosierkolbens 16 veränderbar und dadurch die Dosiermenge des erfindungsgemäßen Einleitungsverteilers 1 einstellbar, ohne dass sich die äußere Länge des Einleitungsverteilers 1 ändert.

Von den beschriebenen Ausführungsformen sind weitere Modifikationen denkbar. So kann beispielsweise der Steuerkörper gänzlich ohne Kanäle ausgebildet sein und stattdessen während der Bewegung von der Grundstellung in die Abgabestellung die Steueröffnung vollständig überstreichen, so dass er in der Abgabestellung auf der einen und in der Grundstellung auf der anderen Seite der Steueröffnung angeordnet ist.

## Patentansprüche

1. Einleitungsverteiler (1) zur dosierten Abgabe von Schmierstoff an eine Schmierstelle, mit einer Steuereinrichtung (9), die einen von einer Grundstellung in eine Abgabestellung bewegbar ausgestalteten, durch ein Vorspannelement (7) in die Grundstellung gedrückten Steuerkörper (5) und eine mit einer Einlassöffnung (2) verbundene, durch den Steuerkörper (5) von einer Dosierkammer (6) getrennte Steuerkammer (3) umfasst, und mit einer Dosiereinrichtung (24), die einen Dosierkolben (16), die mit einer Abgabeöffnung (21) verbundene Dosierkammer (6) und eine durch den Dosierkolben (16) von der Dosierkammer (6) getrennte und an den Steuerkörper (5) grenzende Betätigungskammer (13) umfasst, wobei in der Abgabestellung die Betätigungskammer (13) mit der Steuerkammer (3) und in der Grundstellung mit der Dosierkammer (6) verbunden ist, **dadurch gekennzeichnet, dass** die Steuereinrichtung (9) von der Dosiereinrichtung (24) umgeben ist.

2. Einleitungsverteiler (1) nach Anspruch 1, **dadurch gekennzeichnet, dass** der Steuerkörper (5) in einem Steuerzylinder (4) beweglich angeordnet ist, wobei der Dosierkolben (16) um den Steuerzylinder (4) herum beweglich angebracht ist.

3. Einleitungsverteiler (1) nach Anspruch 1 oder 2, **dadurch gekennzeichnet, dass** der Dosierkolben (16) beweglich in einem Dosierzylinder (15) angeordnet ist.

4. Einleitungsverteiler (1) nach einem der oben genannten Ansprüche, **dadurch gekennzeichnet, dass** der Dosierkolben (16) als Ringkolben ausgebildet ist.

5. Einleitungsverteiler (1) nach einem der oben genannten Ansprüche, **dadurch gekennzeichnet, dass** die Dosierkammer (6) in zwei Teilkammern (19, 20) unterteilt ist, wobei die an den Steuerkörper (5) angrenzende innere Teilkammer (19) im Steuerzylinder (4) und die an den Dosierkolben (16) angrenzende äußere Teilkammer (20) im Dosierzylinder (15) ausgebildet ist.

6. Einleitungsverteiler (1) nach Anspruch 5, **dadurch gekennzeichnet, dass** die beiden Teilkammern (19, 20) der Dosierkammer (6) durch einen Durchbruch (22) im Steuerzylinder (4) miteinander verbunden sind.

7. Einleitungsverteiler (1) nach Anspruch 5 oder 6, **dadurch gekennzeichnet, dass** das Volumen der an den Steuerkörper (5) angrenzenden inneren Teilkammer (19) kleiner als das Volumen der an den Dosierkolben (16) angrenzenden äußeren Teilkammer (20) ist.

8. Einleitungsverteiler (1) nach einem der oben genannten Ansprüche, **dadurch gekennzeichnet, dass** am Dosierkolben (16) wenigstens ein Dichtelement (17) angeordnet ist, durch das der Dosierkolben (16) zwischen dem Dosierzylinder (15) und dem Steuerzylinder (4) abgedichtet angeordnet ist.

9. Einleitungsverteiler (1) nach einem der oben genannten Ansprüche, **dadurch gekennzeichnet, dass** der Dosierkolben (16) durch ein weiteres Vorspannelement (18) in Richtung der Betätigungskammer (13) gedrückt ist.

10. Einleitungsverteiler (1) nach Anspruch 9, **dadurch gekennzeichnet, dass** das weitere Vorspannelement (18) innerhalb der Dosierkammer (6) angeordnet ist.

11. Einleitungsverteiler (1) nach einem der oben genannten Ansprüche, **dadurch gekennzeichnet, dass** im Steuerzylinder (4) eine Steueröffnung (8) ausgeformt ist, durch welche die Betätigungskammer (13) in der Grundstellung mit der Dosierkammer (6) und in der Abgabestellung mit der Steuerkammer (3) verbunden ist.

12. Einleitungsverteiler (1) nach einem der oben genannten Ansprüche, **dadurch gekennzeichnet, dass** eines der axialen Enden des Steuerzylinders (4) als die Einlassöffnung (2) ausgebildet ist.

13. Einleitungsverteiler (1) nach einem der oben genannten Ansprüche, **dadurch gekennzeichnet, dass** eines der axialen Enden des Steuerzylinders (4) als die Auslassöffnung (21) ausgebildet ist.

14. Einleitungsverteiler (1) nach einem der oben genannten Ansprüche, **dadurch gekennzeichnet, dass** im Steuerkörper (5) ein Betätigungskanal (10) ausgeformt ist, durch den die Betätigungskammer (13) in der Abgabestellung mit der Steuerkammer (3) verbunden und in der Grundstellung von der Steuerkammer (3) getrennt ist.

15. Einleitungsverteiler (1) nach Anspruch 14, **dadurch gekennzeichnet, dass** eine Mündungsöffnung des Betätigungskanals (10) am Umfang, der zur Hubachse des Steuerkörpers (5) in der Abgabestellung mit der Steueröffnung (8) wenigstens teilweise überlappend und in der Grundstellung vom Steuerzylinder (4) verschlossen ausgebildet ist.

16. Einleitungsverteiler (1) nach einem der oben genannten Ansprüche, **dadurch gekennzeichnet, dass** im Steuerkörper (5) ein Umströmkanal (11) ausgeformt ist, durch den die Betätigungskammer (13) in der Grundstellung mit der Dosierkammer (6) verbunden und in der Abgabestellung von der Dosierkammer (6) getrennt ist.

17. Einleitungsverteiler (1) nach Anspruch 16, **dadurch gekennzeichnet, dass** eine Mündungsöffnung des Umströmkanals (11) am Umfang, quer zur Hubachse des Steuerkörpers (5) in der Grundstellung mit der Steueröffnung (8) wenigstens teilweise überlappend und in der Abgabestellung vom Steuerzylinder (4) verschlossen ausgebildet ist.

18. Einleitungsverteiler (1) nach Anspruch 15 oder 17, **dadurch gekennzeichnet, dass** der Steuerkörper (5) wenigstens eine Umfangsnut (12) radial zur Hubachse aufweist, in der jeweils eine Mündungsöffnung des Betätigungs- (10) oder Umströmkanals (11) angeordnet ist.

19. Einleitungsverteiler (1) nach einem der oben genannten Ansprüche, **dadurch gekennzeichnet, dass** der Steuerkörper (5) und der Steuerzylinder (4) aus Materialien mit unterschiedlichen Längenausdehnungskoeffizienten hergestellt sind und dass ein Spiel zwischen dem Steuerkörper (5) und dem Steuerzylinder (4) bei einer ersten Betriebstemperatur größer ist als bei einer zweiten, im Vergleich zur ersten höheren Betriebstemperatur.

20. Einleitungsverteiler (1) nach einem der oben genannten Ansprüche, **dadurch gekennzeichnet, dass** der Einleitungsverteiler (1) eine Einstellvorrichtung umfasst, durch die der axiale Hub des Dosierkolbens (16) einstellbar ist.

21. Einleitungsverteiler (1) nach Anspruch 20, **dadurch gekennzeichnet, dass** die Einstellvorrichtung einen in Hubrichtung des Dosierkolbens (16) an verschiedenen Positionen festlegbaren Dosierkolbenanschlag (23") umfasst, der am Dosierzylinder (15) oder am Dosierkolben (16) angeordnet ist.

22. Einleitungsverteiler (1) nach Anspruch 20, **dadurch gekennzeichnet, dass** die Einstellvorrichtung einen in Hubrichtung des Dosierkolbens (16) fest angeordneten Dosierkolbenanschlag (23a") umfasst, der auswechselbar mit dem Dosierzylinder (15) oder dem Dosierkolben (16) verbunden ist.

23. Einleitungsverteiler (1) nach Anspruch 20, **dadurch gekennzeichnet, dass** die Einstellvorrichtung einen in Hubrichtung des Dosierkolbens (16) beweglichen Dosierkolbenanschlag (23b") umfasst, der mit einer beweglich am Dosierzylinder (15) angeordneten Einstellschraube (23b) verbunden ist.

24. Anordnung (25) zur dosierten Abgabe von einem Schmierstoff an mehrere Schmierstellen mit mehreren Einleitungsverteilern (1), und mit einem Schmierstoffverteilerkanal (26), der mit einer Schmierstoffquelle verbindbar ausgestaltet ist, wobei die Einleitungsverteiler (1) mit dem Schmierstoffverteilerkanal (26) verbunden und vom Schmierstoffverteilerkanal (26) wegstehend angeordnet sind, **dadurch gekennzeichnet, dass** die Einleitungsverteiler (1) nach einem der oben genannten Ansprüche ausgestaltet sind.

25. Anordnung (25) nach Anspruch 24, **dadurch gekennzeichnet, dass** die Einleitungsverteiler (1) nebeneinander am Schmierstoffverteilerkanal (26) angeordnet sind und abwechselnd in gleicher Abstehrichtung (A, A') vom Schmierstoffverteilerkanal (26) wegstehen, wobei die beiden Abstehrichtungen (A, A') V-förmig voneinander angeordnet sind.

26. Anordnung (25) nach Anspruch 24, **dadurch gekennzeichnet, dass** die Einleitungsverteiler (1) nebeneinander am Schmierstoffverteilerkanal (26) angeordnet sind und in gleicher Abstehrichtung (A, A') vom Schmierstoffverteilerkanal (26) wegstehen.

## Claims

1. Single line distributor (1) for dosed discharge of lubricant at a lubricating point, with a control device (9) comprising a control element (5) which can be moved from a normal position into a discharge position and is pressed by a bias element (7) into said normal position, and a control chamber (3) which is connected to an inlet opening (2) and which is separated from a dosing chamber (6) by means of the control element (5), and with a dosing device (24) comprising a dosing piston (16), the dosing chamber (6) which is connected to a discharge opening (21), and an actuating chamber (13) which is separated from the dosing chamber (6) by the dosing piston (16) and which is adjacent to the control element (5), whereby the actuating chamber (13) is connected to the control chamber (3) in the discharge position and is connected to the dosing chamber (6) in the normal position, **characterised in that** the control device (9) is surrounded by the dosing device (24).

2. Single line distributor (1) according to Claim 1, **characterised in that** the control element (5) is arranged movably in a control cylinder (4) and the dosing piston (16) is arranged movably around the control cylinder (4).

3. Single line distributor (1) according to Claim 1 or 2, **characterised in that** the dosing piston (16) is arranged movably in a dosing cylinder (15).

4. Single line distributor (1) according to one of the abovementioned Claims, **characterised in that** the dosing piston (16) is formed as a ring piston.

5. Single line distributor (1) according to one of the abovementioned Claims, **characterised in that** the dosing chamber (6) is divided into two sub-chambers (19, 20), wherein the inner sub-chamber (19), which is adjacent to the control element (5), is formed in the control cylinder (4) and the outer sub-chamber (20), which is adjacent to the dosing piston (16), is formed in the dosing cylinder (15).

6. Single line distributor (1) according to Claim 5, **characterised in that** the two sub-chambers (19, 20) of the dosing chamber (6) are connected to each other by means of a passage (22) in the control cylinder (4).

7. Single line distributor (1) according to Claim 5 or 6, **characterised in that** the volume of the inner sub-chamber (19), which is adjacent to the control element (5), is smaller than the volume of the outer sub-chamber (20), which is adjacent to the dosing piston (16).

8. Single line distributor (1) according to one of the abovementioned Claims, **characterised in that** at least one sealing element (17) is arranged on the dosing piston (16), by means of which the dosing piston (16) is arranged between the dosing cylinder (15) and the control cylinder (4) in such a way that it is sealed.

9. Single line distributor (1) according to one of the abovementioned Claims, **characterised in that** the dosing piston (16) is pressed in the direction of the actuating chamber (13) by an additional bias element (18).

10. Single line distributor (1) according to Claim 9, **characterised in that** the additional bias element (18) is arranged within the dosing chamber (6).

11. Single line distributor (1) according to one of the abovementioned Claims, **characterised in that** a control opening (8) is formed in the control cylinder (4), wherein the actuating chamber (13) is connected to the dosing chamber (6) in the normal position and to the control chamber (3) in the discharge position by means of this control opening.

12. Single line distributor (1) according to one of the abovementioned Claims, **characterised in that** one of the axial ends of the control cylinder (4) is formed as the inlet opening (2).

13. Single line distributor (1) according to one of the abovementioned Claims, **characterised in that** one of the axial ends of the control cylinder (4) is formed as the outlet opening (21).

14. Single line distributor (1) according to one of the abovementioned Claims, **characterised in that** an actuating channel (10) is formed in the control element (5), by means of which the actuating chamber (13) is connected to the control chamber (3) in the discharge position and is separated from the control chamber (3) in the normal position.

15. Single line distributor (1) according to Claim 14, **characterised in that** an orifice of the actuating channel (10) is formed on the circumference, across the stroke axis of the control element (5), with the orifice being at least partially overlapped by the control opening (8) in the discharge position and closed by the control cylinder (4) in the normal position.

16. Single line distributor (1) according to one of the abovementioned Claims, **characterised in that** a flow channel (11) is formed in the control element (5), by means of which the actuating chamber (13) is connected to the dosing chamber (6) in the normal position and separated from the dosing chamber (6) in the discharge position.

17. Single line distributor (1) according to Claim 16, **characterised in that** an orifice of the flow channel (11) is formed on the circumference, across the stroke axis of the control element (5), in such a way that it at least partially overlaps the control opening (8) in the normal position and is closed by the control cylinder (4) in the discharge position.

18. Single line distributor (1) according to Claim 15 or 17, **characterised in that** the control element (5) has at least one circumferential groove (12) radial to the stroke axis, in which an orifice of the actuating channel (10) or an orifice of the flow channel (11) is arranged.

19. Single line distributor (1) according to one of the abovementioned Claims, **characterised in that** the control element (5) and the control cylinder (4) are produced from materials having different linear expansion coefficients and **in that** the play between the control element (5) and the control cylinder (4) is greater at a first operating temperature than at a second operating temperature, which is higher than the first.

20. Single line distributor (1) according to one of the abovementioned Claims, **characterised in that** the single line distributor (1) comprises an adjustment device by means of which the axial stroke of the dosing piston (16) can be adjusted.

21. Single line distributor (1) according to Claim 20, **characterised in that** the adjustment device comprises a dosing piston stop (23") that can be set at various positions in the stroke direction of the dosing piston (16), whereby this dosing piston stop is arranged at the dosing cylinder (15) or dosing piston (16).

22. Single line distributor (1) according to Claim 20, **characterised in that** the adjustment device comprises a dosing piston stop (23a") arranged at a fixed position in the stroke direction of the dosing piston (16), wherein this dosing piston stop is connected to the dosing cylinder (15) or dosing piston (16) in such a way that it is interchangeable.

23. Single line distributor (1) according to Claim 20, **characterised in that** the adjustment device comprises a dosing piston stop (23b") that can be moved in the stroke direction of the dosing piston (16), wherein this dosing piston stop is connected to an adjustment screw (23b) that is arranged on the dosing cylinder (15) in such a way that it can move.

24. Arrangement (25) for the dosed discharge of a lubricant at a number of lubricating points with a number of single line distributors (1), and with a lubricant distributor channel (26) that is developed in such a way that it can be connected to a lubricant source, wherein the single line distributors (1) are connected to the lubricant distributor channel (26) and are arranged in such a way that they protrude from the lubricant distributor channel (26), **characterised in that** the single line distributors (1) are developed according to one of the abovementioned Claims.

25. Arrangement (25) according to Claim 24, **characterised in that** the single line distributors (1) are arranged next to one another on the lubricant distributor channel (26) and alternatingly protrude in the same protrusion directions (A, A') from the lubricant distributor channel (26), wherein the two protrusion directions (A, A') are arranged in such a way that they form a V-shape.

26. Arrangement (25) according to Claim 24, **characterised in that** the single line distributors (1) are arranged next to one another on the lubricant distributor channel (26) and protrude from the lubricant distributor channel (26) in the same protrusion direction (A, A').

## Revendications

1. Distributeur d'injection (1) pour l'alimentation dosée d'un lubrifiant à un point de lubrification, avec un dispositif de commande (9) comportant un corps de commande (5) mobile depuis une position de repos vers une position d'alimentation et contraint dans la position de repos par un élément de précontrainte (7), ainsi qu'une chambre de commande (3) connectée à un orifice d'entrée (2) et séparée d'une chambre de dosage (6) par le corps de commande (5), et avec un dispositif de dosage (24) comportant un piston de dosage (16), la chambre de dosage (6) connectée par un orifice d'alimentation (21), ainsi qu'une chambre d'actionnement (13) séparée de la chambre de dosage (6) par le piston de dosage (16) et adjacente au corps de commande (5), moyennant quoi la chambre d'actionnement (13) est connectée à la chambre de commande (3) en position d'alimentation et à la chambre de dosage (6) en position de repos, **caractérisé en ce que** le dispositif de commande (9) est entouré par le dispositif de dosage (24).

2. Distributeur d'injection (1) selon la revendication 1, **caractérisé en ce que** le corps de commande (5) est agencé de façon mobile dans un cylindre de commande (4), dans lequel le piston de dosage (16) est agencé de façon mobile autour du cylindre de commande (4).

3. Distributeur d'injection (1) selon la revendication 1 ou 2, **caractérisé en ce que** le piston de dosage (16) est agencé de façon mobile dans un cylindre de dosage (15).

4. Distributeur d'injection (1) selon l'une des revendications précédentes, **caractérisé en ce que** le piston de dosage (16) est conformé comme un piston annulaire.

5. Distributeur d'injection (1) selon l'une des revendications précédentes, **caractérisé en ce que** la chambre de dosage (6) est divisée en deux chambres partielles (19, 20), moyennant quoi la chambre partielle interne (19) adjacente au corps de commande (5) est agencée dans le cylindre de commande (4) et la chambre partielle externe (20) adjacente au piston de dosage (16) est agencée dans le cylindre de dosage (15).

6. Distributeur d'injection (1) selon la revendication 5, **caractérisé en ce que** les deux chambres partielles (19, 20) de la chambre de dosage (6) sont connectées entre elles par une ouverture (22) dans le cylindre de commande (4).

7. Distributeur d'injection (1) selon la revendication 5 ou 6, **caractérisé en ce que** le volume de la chambre partielle interne (19) adjacente au corps de commande (5) est inférieur au volume de la chambre partielle externe (20) adjacente au piston de dosage (16).

8. Distributeur d'injection (1) selon l'une des revendications précédentes, **caractérisé en ce qu'**au moins un élément d'étanchéité (17) est agencé sur le piston de dosage (16), grâce auquel le piston de dosage (16) est agencé de façon étanche entre le cylindre de dosage (15) et le cylindre de commande (4).

9. Distributeur d'injection (1) selon l'une des revendications précédentes, **caractérisé en ce que** le piston de dosage (16) est contraint par un autre élément de précontrainte (18) en direction de la chambre d'actionnement (13).

10. Distributeur d'injection (1) selon la revendication 9, **caractérisé en ce que** l'autre élément de précontrainte (18) est agencé à l'intérieur de la chambre de dosage (6).

11. Distributeur d'injection (1) selon l'une des revendications précédentes, **caractérisé en ce qu'**un orifice de commande (8) est formé dans le cylindre de commande (4), grâce auquel la chambre d'actionnement (13) est connectée à la chambre de dosage (6) en position de repos et avec la chambre de commande (3) en position d'alimentation.

12. Distributeur d'injection (1) selon l'une des revendications précédentes, **caractérisé en ce qu'**une des extrémités axiales du cylindre de commande (4) est conformée comme orifice d'entrée (2).

13. Distributeur d'injection (1) selon l'une des revendications précédentes, **caractérisé en ce qu'**une des extrémités axiales du cylindre de commande (4) est conformée comme orifice de sortie (21).

14. Distributeur d'injection (1) selon l'une des revendications précédentes, **caractérisé en ce qu'**un canal d'actionnement (10) est formé dans le corps de commande (5), grâce auquel la chambre d'actionnement (13) est connectée à la chambre de commande (3) en position d'alimentation et est séparée de la chambre de commande (3) en position de repos.

15. Distributeur d'injection (1) selon la revendication 14, **caractérisé en ce qu'**un orifice d'embouchure du canal d'actionnement (10) périphérique est conformé sur l'essieu rétractable du corps de commande (5), chevauchant au moins partiellement l'orifice de commande (8) en position d'alimentation et fermé en position de repos du cylindre de commande (4).

16. Distributeur d'injection (1) selon l'une des revendications précédentes, **caractérisé en ce qu'**un canal de contournement (11) est formé dans le corps de commande (5), grâce auquel la chambre d'actionnement (13) est connectée à la chambre de dosage (6) en position de repos et est séparée de la chambre de dosage (6) en position d'alimentation.

17. Distributeur d'injection (1) selon la revendication 16, **caractérisé en ce qu'**un orifice d'embouchure du canal de contournement (11) périphérique est conformé perpendiculairement à l'essieu rétractable du corps de commande (5), chevauchant au moins partiellement l'orifice de commande (8) en position de repos et isolé du cylindre de commande (4) en position d'alimentation.

18. Distributeur d'injection (1) selon la revendication 15 ou 17, **caractérisé en ce que** le corps de commande (5) comporte au moins une rainure périphérique (12) radiale par rapport à l'essieu rétractable, dans laquelle est agencé respectivement un orifice d'embouchure du canal d'actionnement (10) ou du canal de contournement (11).

19. Distributeur d'injection (1) selon l'une des revendications précédentes, **caractérisé en ce que** les matériaux dont sont constitués le corps de commande (5) et le cylindre de commande (4) présentent différents coefficients de dilatation linéaire et **en ce qu'**un jeu entre le corps de commande (5) et le cylindre de commande (4) à une première température de service est supérieur audit jeu à une seconde température de service supérieure à la première.

20. Distributeur d'injection (1) selon l'une des revendications précédentes, **caractérisé en ce que** le distributeur d'injection (1) comprend un dispositif de réglage permettant d'ajuster la rétraction axiale du piston de dosage (16).

21. Distributeur d'injection (1) selon la revendication 20, **caractérisé en ce que** le dispositif de réglage comprend une butée de piston de dosage (23") réglable en plusieurs positions selon la direction de rétraction du cylindre de dosage (16), ladite butée étant agencée sur le cylindre de dosage (15) ou sur le piston de dosage (16).

22. Distributeur d'injection (1) selon la revendication 20, **caractérisé en ce que** le dispositif de réglage comprend une butée de piston de dosage (23a") agencée de manière fixe selon la direction de rétraction du cylindre de dosage (16), ladite butée étant attachée de façon interchangeable sur le cylindre de dosage (15) ou sur le piston de dosage (16).

23. Distributeur d'injection (1) selon la revendication 20, **caractérisé en ce que** le dispositif de réglage comprend une butée de piston de dosage (23b") mobile selon la direction de rétraction du cylindre de dosage (16), ladite butée étant attachée à une vis de réglage (23b) agencée de façon mobile sur le cylindre de dosage (15).

24. Agencement (25) pour l'alimentation dosée d'un lubrifiant à plusieurs points de lubrification avec plusieurs distributeurs d'injection (1) et avec un canal de distribution de lubrifiant (26) pourvu d'une source de lubrifiant connectable, moyennant quoi les distributeurs d'injection (1) sont connectés au canal de distribution de lubrifiant (26) et sont agencés en projection à partir du canal de distribution de lubrifiant (26), **caractérisé en ce que** les distributeurs d'injection (1) sont constitués selon l'une des revendications précédentes.

25. Agencement (25) selon la revendication 24, **caractérisé en ce que** les distributeurs d'injection (1) sont agencés côte à côte sur le canal de distribution de lubrifiant (26) et sont orientés de façon alternative dans une même direction de projection (A, A') à partir du canal de distribution de lubrifiant (26), moyennant quoi les deux directions de projection (A, A') sont agencées en forme de V.

26. Agencement (25) selon la revendication 24, **caractérisé en ce que** les distributeurs d'injection (1) sont disposés côte à côte sur le canal de distribution de lubrifiant (26) et se projettent dans une même direction de projection (A, A') à partir du canal de distribution de lubrifiant (26).
